# EUROPEAN PATENT APPLICATION

(11) **EP 4 826 833 A1**
(43) Date of publication of application: **21.10.2026**
(21) Application number: 24903819.1
(22) Date of filing: 27.02.2024
(51) Int. Cl.: H01M 10/42, G01D 21/02

(54) **PARTITION WALL JIG FOR SECONDARY BATTERY PENETRATION TEST AND PENETRATION TEST DEVICE AND METHOD USING SAME**

(30) Priority: 14.12.2023 KR 20230181944
(71) Applicant: SAMSUNG SDI CO., LTD., Yongin-si, Gyeonggi-do 17084 (KR)
(72) Inventor: LEE, Won Yeol, Yongin-si, Gyeonggi-do 17084 (KR)
(74) Representative: Marks & Clerk LLP
(86) International application number: PCT/KR2024/002493
(87) International publication number: WO 2025/127246

(57) **Abstract**

The present disclosure relates to a partition jig for a secondary battery penetration test, and a penetration test apparatus and method using the same. The technical object to be solved is to suppress swelling by pressing an electrode plate charged for a penetration test of a secondary battery, thereby eliminating the possibility of explosion that may occur during a test. To this end, the present disclosure provides a partition jig for a secondary battery penetration test, and a secondary battery penetration test apparatus and method using the same, wherein the partition jig includes a main body configured to support a case of a secondary battery, a pressing portion which protrudes from the main body and enters through a perforation formed in the case of the secondary battery to press an electrode plate of an internal electrode assembly, and a nail through-hole which is formed in the pressing portion and through which a nail for a secondary battery penetration test passes.

## Description

### [Technical Field]

The present disclosure relates to a secondary battery, and more specifically, to a partition jig used for a secondary battery penetration test, and a penetration test apparatus and method using the same.

### [Background Art]

Unlike primary batteries that cannot be charged, secondary batteries are batteries that can be charged and discharged. In general, a secondary battery includes an electrode assembly including positive and negative electrode plates, a case accommodating the electrode assembly, electrode terminals connected to the electrode assembly, a vent for discharging gases (degassing) generated inside the case, and the like.

Recently, capacities of secondary batteries are becoming higher for storing power and driving motors in hybrid and electric vehicles. In large-capacity batteries, in particular, there is a high demand for safety. For example, in the case of electric vehicles, accidents may occur due to external objects damaging a battery case and penetrating or piercing an internal electrode assembly. In this case, a positive electrode and a negative electrode of an electrode assembly come into contact with each other to cause a very high short-circuit current to flow, which may cause overheating, thermal runaway, or explosion of a battery.

In response to such a demand for the safety of secondary batteries, penetration safety evaluation is included among secondary battery safety evaluation items, and penetration tests are being conducted on secondary batteries. When a secondary battery penetration test is performed, after the secondary battery is charged, a nail hits an electrode plate of an electrode assembly to partially or completely penetrate the electrode plate.

The above information disclosed in this Background section is for enhancement of understanding of the background of the present disclosure, and therefore, it may contain information that does not constitute a related (or prior) art.

### [Disclosure]

### [Technical Problem]

The swelling of an internal electrode assembly charged for a secondary battery penetration test and the expansion of a case may occur, which may cause accidents such as the thermal runaway or explosion of a battery. Therefore, the present disclosure is directed to suppressing swelling by pressing an electrode plate of an electrode assembly charged during a secondary battery penetration test, thereby eliminating a possibility of explosion that may occur during a test.

### [Technical Solution]

To solve the problems, according to one aspect of the present disclosure, a penetration test apparatus for a secondary battery includes a test stand on which a secondary battery is placed, a partition jig configured to support the secondary battery of which an electrode plate is exposed through a perforation formed in a case of the secondary battery, a nail configured to hit the exposed electrode plate of the secondary battery through the partition jig, and a chuck configured to fix the nail, wherein the partition jig includes a main body, a pressing portion which protrudes from the main body and enters through the perforation formed in the case of the secondary battery to press the electrode plate of an internal electrode assembly, and a nail through-hole formed in the pressing portion.

In some embodiments, the main body and the pressing portion of the partition jig may be integrally formed. In addition, in some embodiments, the main body and the pressing portion of the partition jig may be separate bodies.

In addition, to solve the problems, according to another aspect of the present disclosure, a partition jig used for a secondary battery penetration test includes a main body configured to support a case of a secondary battery, a pressing portion which protrudes from the main body and enters through a perforation formed in the case of the secondary battery to press an electrode plate of an internal electrode assembly, and a nail through-hole which is formed in the pressing portion and through which a nail for a secondary battery penetration test passes.

In addition, to solve the problems, according to still another aspect of the present disclosure, a penetration test method of a secondary battery includes placing a secondary battery on a test stand and forming a hole in a case of the secondary battery to expose an electrode plate, installing a partition jig including a pressing portion configured to press the exposed electrode plate of the secondary battery and charging the secondary battery, and allowing a nail to hit the exposed electrode plate of the secondary battery and performing a penetration test..

### [Advantageous Effects]

In a partition jig for a secondary battery penetration test, and a penetration test apparatus and method for a secondary battery using the same according to the present disclosure, swelling of an electrode assembly is suppressed during a secondary battery penetration test, thereby preventing explosion of a battery. More specifically, a main body of a partition jig can support a case of a secondary battery to prevent the secondary battery from swelling or prevent a portion around a perforation from lifting, and the pressing portion can press an exposed electrode plate to suppress swelling.

Since a main body and a pressing portion of a partition jig can be manufactured separately to be optionally assembled and separated, according to a penetration test method (for example, in the case of a penetration test that does not require pressing an electrode plate of a secondary battery), the pressing portion can be removed, and only the main body can be used to perform a penetration test. Thus, the flexibility of a secondary battery penetration test can be improved.

Effects of the present disclosure are not limited to those described above, and other effects not specifically mentioned herein will be clearly understood by those skilled in the art from the description of the present disclosure below.

### [Description of Drawings]

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a top perspective view of a prismatic secondary battery according to an example;
FIG. 2 is a cross-sectional view along line I-I' of FIG. 1;
FIG. 3 is a schematic view for describing a concept of a penetration test apparatus for a secondary battery according to the present disclosure;
FIG. 4 is a cross-sectional view along II-II' of FIG. 3 which illustrates a standby state for a penetration test;
FIG. 5 is a schematic view for describing swelling that may occur due to a secondary battery being charged for a secondary battery penetration test;
FIG. 6 is a schematic view for describing that a partition jig is used to suppress swelling of an electrode plate of a secondary battery and perform a penetration test according to the present disclosure;
FIG. 7 is a cross-sectional view illustrating a state in which a penetration test is being performed by allowing a nail to hit an electrode plate;
FIGS. 8 and 9 are views illustrating a configuration of a partition jig according to one embodiment of the present disclosure, wherein the central side of FIG. 8 is a plan view of a main body of the partition jig, the upper side of FIG. 8 is a top side view, the right side of FIG. 8 is a cross-sectional view along line A-A', the left side of FIG. 9 is a plan view of a pressing portion, and the right side of FIG. 9 is a cross-sectional view along line B-B';
FIG. 10 is a conceptual view for describing an assembly method of the main body and the pressing portion of the partition jig shown in FIGS. 8 and 9;
FIG. 11 is a cross-sectional view along line III-III' of FIG. 10 which illustrates a state before the main body and the pressing portion are assembled;
FIG. 12 illustrates a state in which the main body and the pressing portion shown in FIG. 11 are coupled;
FIG. 13 is a schematic view of a secondary battery penetration test using a partition jig in which a main body and a pressing portion are coupled;
FIG. 14 is an enlarged view of a portion into which a nail penetrates in FIG. 13;
FIG. 15 is an exemplary view of a secondary battery module;
FIG. 16 is an exemplary view of a secondary battery pack including the secondary battery module shown in FIG. 15; and
FIG. 17 is a conceptual view illustrating that the secondary battery pack illustrated in FIG. 16 is installed in a vehicle.

### [Modes of the Invention]

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

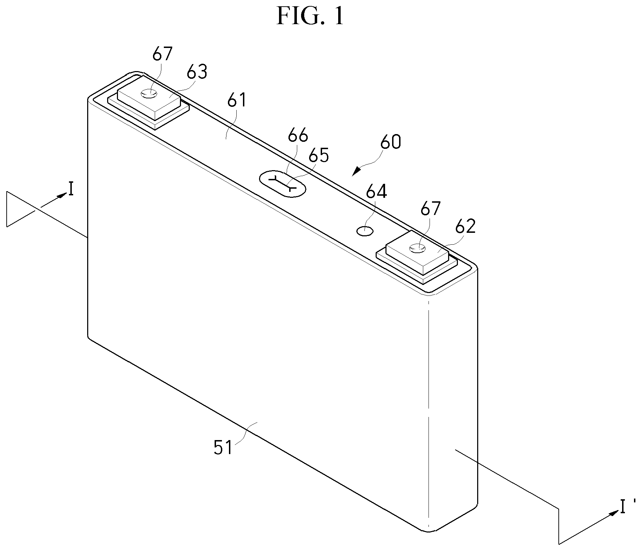

FIG. 1 is a top perspective view of a secondary battery that may be subjected to a penetration test.

A case 51 forms the overall exterior of the secondary battery and may be formed of a conductive metal such as aluminum, an aluminum alloy, or nickel-plated steel. In addition, the case 51 may provide a space in which an electrode assembly is accommodated.

The cap assembly 60 may include a cap plate 61 covering an opening of the case 51, and the case 51 and the cap plate 61 may be made of a conductive material. Here, a first terminal 62 and a second terminal 63 may be electrically connected to an internal positive or negative electrode plate and may be installed to pass through and protrude outward from the cap plate 61.

An electrolyte inlet 64 in which a seal stopper may be installed may be formed in the cap plate 61, and a vent 66 in which a notch 65 is formed may be installed. The vent 66 is for degassing a gas generated inside the battery.

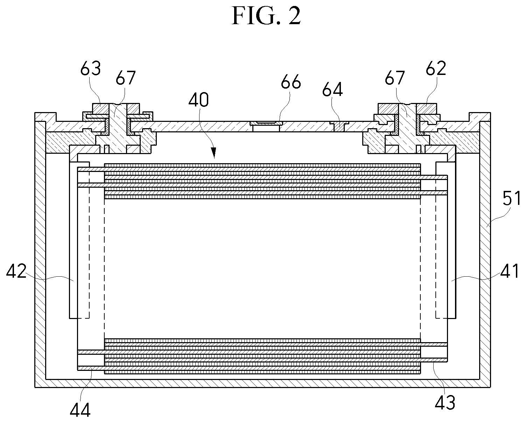

FIG. 2 is a cross-sectional view along line I-I' of FIG. 1 that shows the inside of the secondary battery according to one form. The shown secondary battery basically includes an electrode assembly 40, a first current collector 41, a first terminal 62, a second current collector 42, a second terminal 63, and a cap assembly 60.

An electrode assembly 40 may be formed in the form of a stack in which a first electrode plate, a separator, and a second electrode plate, which are formed in a plate shape or a film shape, are wound or stacked. When the electrode assembly 40 is a wound type (referred to as a jelly roll), a winding axis may be parallel to a longitudinal direction of the case. Alternatively, the electrode assembly 40 may be a stacked type rather than the winding type. However, in the present disclosure, the shape of the electrode assembly 40 is not limited thereto. Additionally, the electrode assembly 40 may be a Z-stack electrode assembly in which a first electrode plate and a second electrode plate are inserted on both sides of a separator bent in a Z shape. In addition, the electrode assembly 40 may be accommodated inside the case by layering long sides of one or more electrode assemblies to be adjacent to each other, and the number of electrode assemblies is not limited in the present disclosure. The first electrode plate of the electrode assembly 40 may serve as a negative electrode and the second electrode plate thereof may serve as a positive electrode, or vice versa.

The first electrode plate is formed by applying a first electrode active material, such as graphite or carbon, on a first electrode current collector (substrate) made of metal foil, such as copper, a copper alloy, nickel, or a nickel alloy, and may include a first electrode tab (or a first uncoated portion) which is a region in which the first electrode active material is not applied. A first electrode tab 43 may be a passage for a current flow between the first electrode plate and the first current collector 41. In some embodiments, the first electrode tab 43 may be formed by being cut to protrude toward one side in advance when the first electrode plate is manufactured or may protrude further toward one side than the separator without a separate cut.

The second electrode plate is formed by applying a second electrode active material, such as a transition metal oxide, on a substrate made of a metal foil, such as aluminum or an aluminum alloy and may include a second electrode tab 44 (or a second uncoated portion) which is a region in which the second electrode active material is not applied. The second electrode tab 44 may be a passage for a current flow between the second electrode plate and the second current collector 42. In some embodiments, the second electrode tab 44 may be formed by being cut to protrude toward the other side in advance when the second electrode plate is manufactured and may further protrude toward the other side than the separator without a separate cut.

In some embodiments, the first electrode tab 43 may be located on a side surface of a right side of the electrode assembly 40, and the second electrode tab 44 may be located on a side surface of a left side of the electrode assembly 40 or located on one surface in the same direction. In addition, in some embodiments, the first electrode tab 43 and the second electrode tab 44 may be located at an upper portion of the electrode assembly 40.

Here, the left side, right side, and upper portion are for convenience of description based on the secondary battery shown in FIG. 1, and the positions may change when the secondary battery is rotated left and right or up and down.

The separator serves to allow movement of lithium ions and prevent a short circuit between the first electrode plate and the second electrode plate. The separator may be made of, for example, a polyethylene film, a polypropylene film, or a polyethylene-polypropylene film.

The first electrode tab 43 of the first electrode plate and the second electrode tab 44 of the second electrode plate extend from both ends of the electrode assembly 40. In some embodiments, the electrode assembly 40 may be accommodated in the case 51 together with an electrolyte.

In the electrode assembly 40, the first electrode tab 43 and the second electrode tab 44 protruding toward both ends from the first electrode plate and the second electrode plate may be connected to the first current collector 41 and the second current collector 42, respectively, by welding. As described above, when the first electrode tab 43 and the second electrode tab 44 are located at the upper portion of the electrode assembly 40 in some embodiments, the first current collector and the second current collector are located above the electrode assembly 40.

The first current collector 41 and the second current collector 42 may be connected to the first terminal 62 and the second terminal 63, respectively, which are described in FIG. 1, through connection members 67. In some embodiments, outer surfaces of the connection members 67 may be screw-machined and fastened to the first terminal 62 and the second terminal 63 through screw coupling. However, the present disclosure is not limited thereto, and the connection members 67 may be coupled to the first terminal 62 and the second terminal 63 by riveting or welding.

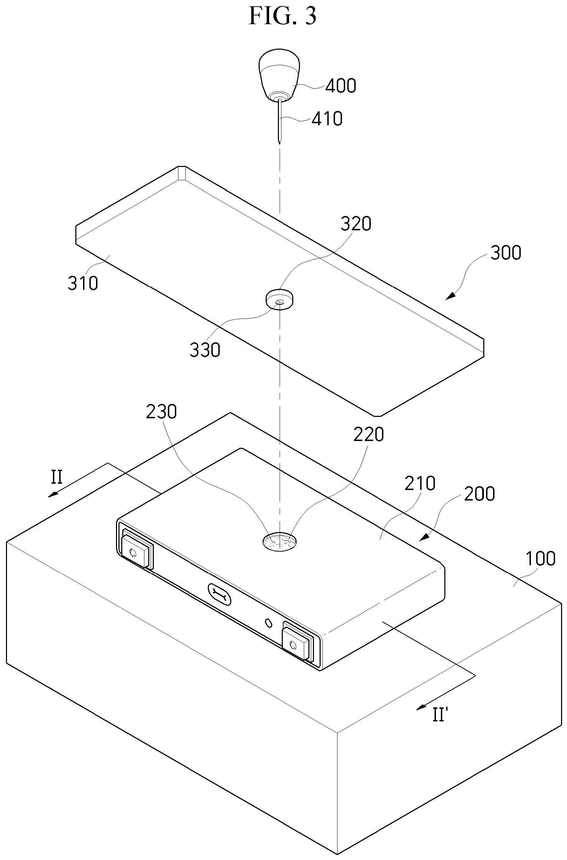

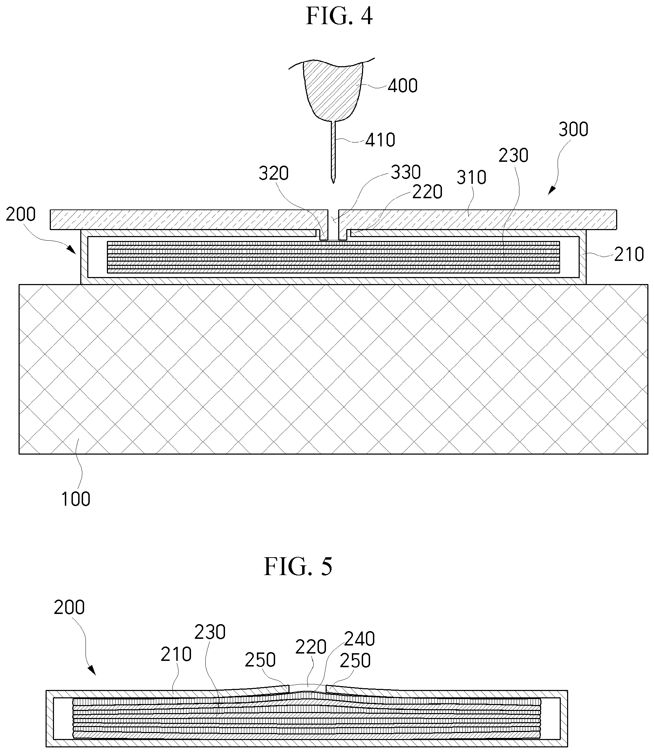

FIG. 3 is a schematic view for describing a concept of a penetration test apparatus for a secondary battery and a partition jig used therein according to the present disclosure FIG. 4 is a cross-sectional view along II-II' of FIG. 3 which illustrates a standby state for a penetration test.

Referring to FIGS. 3 and 4, the penetration test apparatus for the secondary battery may mainly include a test stand 100 on which a secondary battery 200 is placed, a partition jig 300 which is installed on the secondary battery 200, of which an electrode plate 230 is exposed through a perforation 220 formed in a case 210 of the secondary battery, to support the secondary battery, a nail 410 which hits the exposed electrode plate 230 of the secondary battery 200 through the partition jig 300, and a chuck 400 which fixes the nail.

For a penetration test, the secondary battery 200 may be placed on the test stand 100, the perforation 220 with a diameter of about 10 mm to about 20 mm may be formed in the case 210 to expose the electrode plate 230 of the electrode assembly, and then the secondary battery 200 may be charged. Here, the perforation 220 may be formed using a laser cutter or a physical cutter, but the present disclosure is not limited thereto. In addition, the perforation 220 may be formed in a circular shape, but the present disclosure is not limited thereto.

The partition jig 300 may include a main body 310 and a pressing portion 320 that protrudes from the main body 310 and enters through the perforation 220 formed in the case 210 of the secondary battery to press the electrode plate 230 of the internal electrode assembly. The pressing portion 320 may include a nail through-hole 330 through which the nail 410 passes for a penetration test.

The partition jig 300 is installed on the secondary battery 200, of which the electrode plate 230 is exposed through the perforation 220, to support and charge the secondary battery, and then a penetration test is performed. After the partition jig 300 is installed, the secondary battery 200 may be charged, or conversely, after the secondary battery 200 is charged first, the partition jig 300 may be installed.

A secondary battery charge amount during a penetration test may be full charge (100% charge) or partial charge according to the penetration test specification. In addition, a temperature sensor, a current/voltage measuring element, or the like may be used to measure temperature or electrical characteristic changes during penetration of the nail.

In this way, when the partition jig 300 for a penetration test is installed, the pressing portion 320 may press the electrode plate 230 inside the secondary battery, and the main body 310 may press the case 210 of the secondary battery. Accordingly, it is possible to perform a secondary battery penetration test while suppressing swelling of the electrode plate 230 and/or expansion of the case 210.

FIG. 4 schematically illustrates that the electrode plate 230 is stacked in the case 210 of the secondary battery 200. Here, the electrode plate 230 is illustrated as being an electrode plate of a stack type electrode assembly, but the electrode plate 230 also includes an electrode plate of a jelly roll type electrode assembly and electrode plates of other types of electrode assemblies.

In addition, in FIG. 4, more specific elements of the penetration test apparatus, such as a lifting mechanism for the nail chuck 400, a mounting mechanism for the secondary battery 200 on the test stand 100, and a fastening structure of the test stand 100 and the partition jig 300, are omitted.

The main body 310 of the partition jig 300 may be a flat plate made of various materials such as a metal, a synthetic resin, wood, compressed paper, and a composite material. In FIG. 3, the main body 310 is illustrated as having a rectangular shape, but the present disclosure is not limited thereto. For example, the main body 310 may be manufactured in a square shape, another polygonal shape, a circular shape, an oval shape, or other irregular shapes.

The pressing portion 320 may be formed integrally when the main body 310 is manufactured, but the present disclosure is not limited thereto. The pressing portion 320 may be manufactured separately and bonded or attached to the main body 310.

A shape of the pressing portion 320 is illustrated as a cylindrical shape, but the present disclosure is not limited thereto. For example, the shape of the pressing portion 320 may be a polygonal pillar shape such as a conical pillar shape or a quadrangular pillar shape. The shape of the pressing portion 320 may depend on a shape of the perforation 220 formed in the case 210 of the secondary battery, and preferably, the pressing portion 320 may have a size to pass through the perforation 220.

FIG. 5 is a schematic view for describing swelling that may occur during a secondary battery penetration test.

In a standby state (see FIG. 4) before a penetration test is performed, the secondary battery 200 is fully charged and stands by for a certain period of time (about 10 hours to about 20 hours). In this case, since the secondary battery 200 is in a fully charged state, when the partition jig 300 is not present, the electrode assembly inside the case 210 may swell as shown in FIG. 5. Thus, the electrode plate 230 may swell and protrude through the perforation 220 (see reference numeral 240), a periphery 250 of the perforation 220 may be lifted, or in more severe cases, an explosion may occur to rupture the case 210.

Therefore, when a secondary battery penetration test is performed, swelling and case expansion are suppressed using the partition jig 300 of the present disclosure, thereby preventing explosion of a battery.

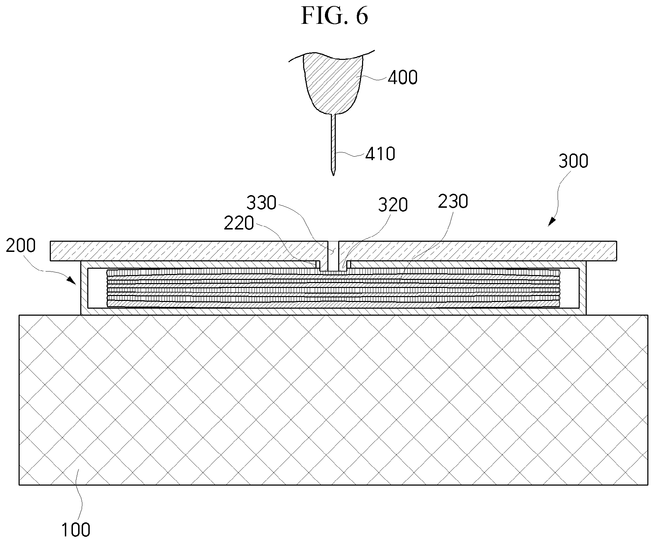

FIG. 6 is a schematic view for describing that the partition jig 300 is used to suppress swelling of the electrode plate of the secondary battery 200 and perform a penetration test according to the present disclosure.

The partition jig 300 described with reference to FIGS. 3 and 4 is covered with the case 210 of the secondary battery 200 so that the pressing portion 320 is allowed to press the exposed electrode plate 230 of the secondary battery 200. That is, the pressing portion 320 of the partition jig 300 may enter through the perforation 220 formed in the case 210 of the secondary battery 200 and may press the internal electrode plate 230 to suppress or alleviate swelling, and the main body 310 of the partition jig 300 may press the case 210 of the secondary battery 200 to prevent swelling.

FIG. 6 illustrates that the electrode plates 230 inside the case 210 of the secondary battery 200 swells, but the case 210 is pressed by the main body 310 of the partition jig 300 and thus is not lifted or expanded, and the swelling is not expanded because the electrode plate 230 is pressed by the pressing portion 320.

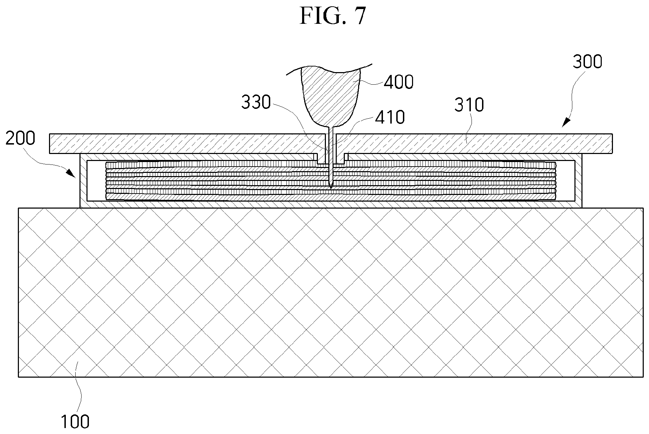

FIG. 7 is a cross-sectional view illustrating a state in which a penetration test is being performed by allowing the nail 410 to hit the electrode plate 230.

When the nail chuck 400 is lowered in a state in which the main body 310 of the partition jig 300 presses the case 210 of the secondary battery 200 and the pressing portion 320 presses the exposed electrode plate 230, the nail 410 may pass through the nail through-hole 330 formed in the pressing portion 320 to penetrate the exposed electrode plate 230 of the secondary battery 200. According to the test specification, the nail 410 may penetrate the electrode plate 230 of the electrode assembly to a partial depth (for example, 2 mm) or may completely penetrate the electrode plate 230.

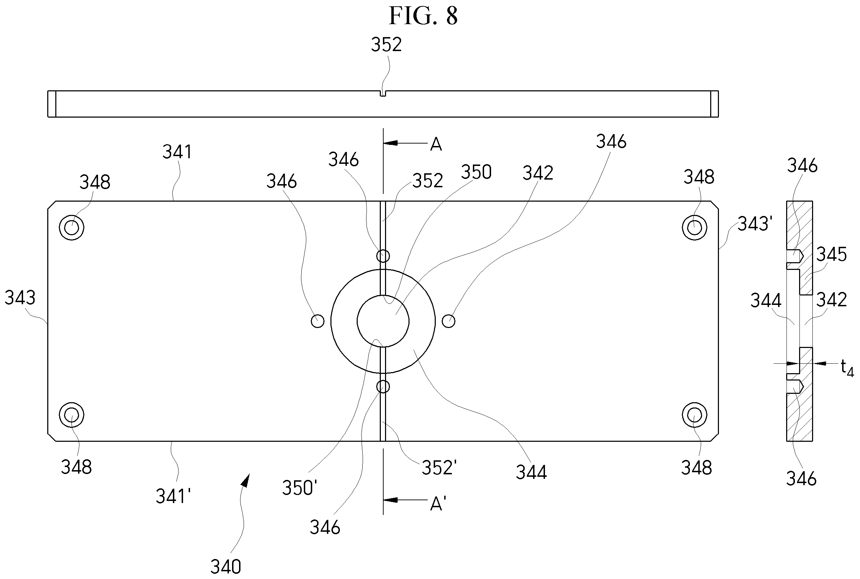

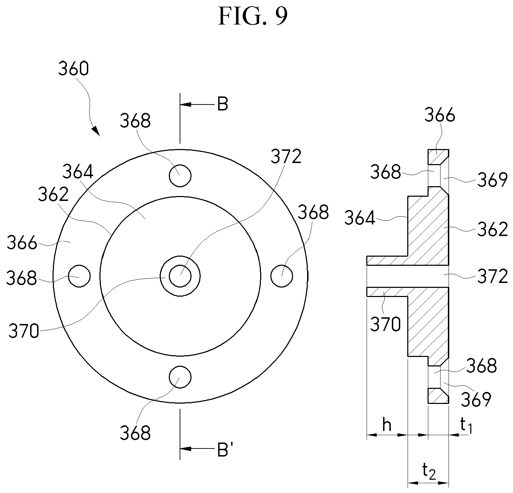

FIGS. 8 and 9 illustrate an embodiment in which a main body and a pressing portion of a partition jig may be manufactured to be assembled and separated. A first part shown in FIG. 8 and a second part shown in FIG. 9 may be separately manufactured and assembled with each other. Hereinafter, the first part is referred to as a main body 340, and the second part is referred to as the pressing portion 360.

The main body 340 and the pressing portion 360 may be used for a penetration test in a mutually assembled state, but according to the purpose (for example, in the case of a test in which an electrode plate 230 does not need to be pressed, the pressing portion 360 may be separated, and only the main body 340 may be used for the penetration test.

First, the first part according to the present embodiment, that is, the main body 340, will be described with reference to FIG. 8. The central side of FIG. 8 is a plan view of the main body 340 of the partition jig, the upper side thereof is a top view, and the right side thereof is a cross-sectional view along line A-A'.

An opening 342 may be formed in an approximately central portion of the main body 340 to communicate with a perforation 220 formed in a case 210 of a secondary battery 200 to be tested. A diameter of the opening 342 being greater than or equal to a diameter of the perforation 220 may be advantageous in performing a test, but the present disclosure is not limited thereto.

A recessed portion 344 may be formed around the opening 342 to a depth that is less than a thickness of the main body 340 (that is, to a depth at which the recessed portion 344 does not penetrate the main body 340). The pressing portion 360 of FIG. 9 may be coupled to the recessed portion 344.

There is no limitation on the depth of the recessed portion 344, but it is preferable that the depth of the recessed portion 344 does not exceed half a flat plate thickness of the main body 340 in order to maintain the rigidity of the main body 340. In the right cross-sectional view of FIG. 8, the remaining main body thickness portion from which the recessed portion 344 is not recessed is indicated by reference numeral 345. In addition, a thickness of the portion 345 is denoted by t4. A shape of the recessed portion 344 is illustrated as a circular shape, but the present disclosure is not limited thereto. For example, the recessed portion 344 may also have an oval shape or a polygonal shape.

A fastening groove 346 necessary for a fastening means for fastening when the pressing portion 360 of FIG. 9 is coupled may be formed around the recessed portion 344. This fastening groove 346 is illustrated as a blind hole in FIG. 8, but the present disclosure is not limited thereto. For example, the fastening groove 346 may be formed as a through-hole.

Four fastening grooves 346 are shown in FIG. 8, but the present disclosure is not limited thereto. A diameter of the fastening groove 346 depends on a fastening means such as a used bolt, screw, or nut. Screw threads may or may not be formed. When a bolt and a nut are used as fastening meanss, inner screw threads of the fastening groove 346 may not be necessary.

A through-hole 348 may be formed in the main body 340 as an installation portion for installation on a test stand 100. Four through-holes 348 are shown in FIG. 8, but the present invention is not limited thereto. In addition, there is no limitation on the shape, diameter, position, or the like of the through-holes 348. Without the through-hole 348, the main body 340 may also be installed on the test stand 100 using other installation portions, for example, clamps or tongs.

In addition, the main body 340 may have a first groove 352 formed to extend from one circumferential surface 350 of the opening 342 to an edge of a first long side 341 of the main body 340 and/or a second groove 352' formed to extend from the other circumferential surface 350' of the opening 342 to an edge of a second long side 341' of the main body 340. The first groove 352 and/or the second groove 352' may accommodate a lead wire of a temperature sensor (not shown) or other elements used during a penetration test. FIG. 8 illustrates that the first groove 352 and/or the second groove 352' are formed in a linear shape, but the present disclosure is not limited thereto. There is no limitation on the shape, quantity, or position of the first groove 352 and/or the second groove 352'.

In FIG. 8, the main body 340 is illustrated as having a rectangular flat plate shape having the first long side 341 and the second long side 341' opposite to each other and a first short side 343 and a second short side 343' opposite to each other, but the present disclosure is not limited thereto. For example, the main body 340 may be formed in a square shape without distinction between a long side and a short side, or other shape such as a polygonal shape such as a rhombus, parallelogram, or pentagon shape, a circular shape, an oval shape, or an irregular shape. As a material of the main body 340, various materials such as a metal, a synthetic resin, wood, compressed paper, and a composite material may be used.

An example of dimensions of actual implementation products of the main body 340 shown in FIG. 8 is introduced. A flat plate has a width of 238 mm (length of a first or second long side), a height of 92 mm (length of a first or second short side), and a thickness of 10 mm, the opening 342 has a diameter of 20 mm, the recessed portion 344 has a diameter of 40 mm and a depth of 5 mm, the fastening groove 346 has a diameter of 5 mm (diameter corresponding to a 5 mm bolt) and a depth of 5 mm, a circle formed by centers of four fastening grooves 346 has a diameter of 50 mm, and the first groove 352 and the second groove 352' each have a depth of 2 mm and a width of 2 mm.

Now, the second part of the partition jig of the present embodiment, that is, the pressing portion 360, will be described with reference to FIG. 9. In FIG. 9, the left side is a plan view of the pressing portion 360, and the right side is a cross-sectional view along line B-B'.

The pressing portion 360 may have a shape of an approximately circular plate, but the present disclosure is not limited thereto. For example, the pressing portion 360 may be made in a polygonal shape such as an oval, triangular, quadrilateral, or pentagonal shape, rather than a perfect circular shape. The pressing portion 360 may not have the same shape as the main body 340 as long as the pressing portion 360 has a shape that can be inserted into the recessed portion 344 of the main body 340 and coupled to the main body 340.

As a material of the pressing portion 360, various materials such as a metal, a synthetic resin, wood, compressed paper, and a composite material may be used.

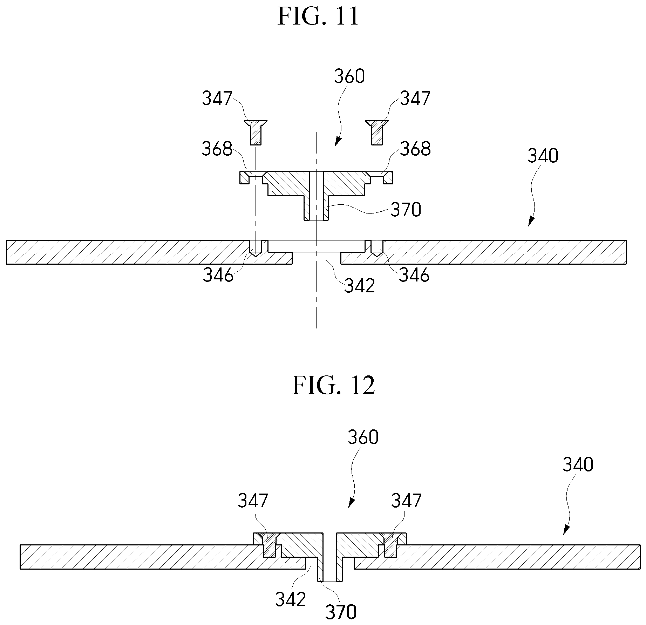

The pressing portion 360 may include a main body assembly 362 that is inserted into the recessed portion 344 of the main body 340 and coupled to the main body 340. The main body assembly 362 may include an insertion portion 364 that is inserted into the recessed portion 344 of the main body 340, and a fastening portion 366 in which a fastening hole 368 is formed and which is fastened to the fastening groove 346 formed in the main body 340 using a bolt or screw (not shown in FIG. 9) after being inserted into the recessed portion 344. In this way, the insertion portion 364 may be inserted into the recessed portion 344, and the fastening portion 366 may be fastened to the main body 340 so that the pressing portion 360 of FIG. 9 may be coupled to the main body 340 of FIG. 8. A groove 369 may be formed in the fastening hole 368 to accommodate a head of a bolt 347 (see FIG. 11) when the bolt 347 is used. In FIG. 9, the groove 369 is illustrated as being formed in a shape capable of accommodating a head of a flush bolt.

In another embodiment, as described above, a magnet and/or a magnetic material may be used as a fastening means for the main body 340 and the pressing portion 360. In this case, the fastening groove 346 and the fastening hole 368 may not be necessary.

In FIG. 9, the total thickness of the main body assembly 362 is denoted by t2, and the thickness of the fastening portion 366 is denoted by t1, so that a thickness of the recessed portion 344 is t2 - t1. As seen here, the thickness t1 of the fastening portion 366 may be smaller than the thickness t2 of the main body assembly 362. However, in order to maintain the rigidity of the pressing portion 360, it is preferable that the thickness t1 of the fastening portion 366 be not less than half the thickness t2 of the main body assembly 362.

In addition, a protrusion 370 may be formed on the insertion portion 364 of the main body assembly 362 to pass through the opening 342 of the main body 340 of FIG. 8 and finally be inserted into the perforation 220 formed in the case 210 of the secondary battery 200 to press the electrode plate 230. The protrusion 370 may perform a function corresponding to the pressing portion 320 shown in FIG. 3.

The protrusion 370 may have a diameter to pass through the opening 342 of the main body 340 of FIG. 8. However, it is preferable that the protrusion 370 have a diameter that is not less than 50% of a diameter of the perforation 220. This is because the electrode plate 230 exposed through the perforation 220 of the secondary battery 200 being pressed with a sufficient area is preferable in achieving the purpose of the present disclosure.

A nail through-hole 372 through which a nail 410 passes may be formed in the protrusion 370 in an axial direction. A diameter of the nail through-hole 372 may be designed to be at least sufficient to prevent the nail 410 from being caught on an inner surface of the through-hole 372 while the nail 410 passes through the nail through-hole 372, even when there is a positional deviation of surrounding structures.

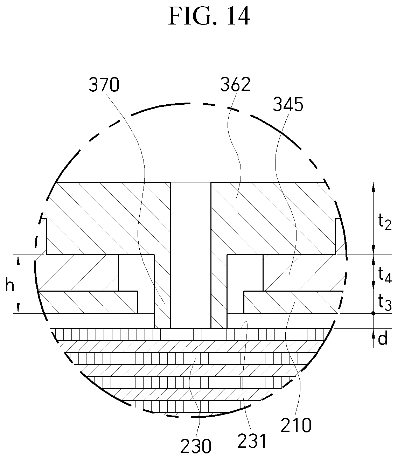

A height of the protrusion 370, that is, a distance h (see FIG. 9) from a surface of the insertion portion 364 to a surface of the protrusion 370 pressing the electrode plate 230, may be determined according to a thickness of the case 210 of the secondary battery 200 to be tested and a position of an internal electrode plate 231. This will be described below with reference to FIG. 14.

In addition, a fastening means to be fastened to the fastening groove 346 of the main body 340 may pass through the fastening hole 368 of the fastening portion 366. The size, shape, position, number, or the like of the fastening holes 368 may depend on the size, shape, position, number, or the like of the fastening grooves 346 of the main body 340.

The fastening means may be a bolt, a screw, a clamp, or the like. For example, if the fastening means is a bolt or screw, screw threads may be formed on an inner surface of the fastening groove 346 of the main body 340. As another example, the fastening means may be a bolt and a nut, and in this case, the fastening groove 346 may be a through-hole without screw threads formed on an inner surface. In addition, the fastening means may be a clamp or magnet of a different type from a bolt or screw. In this case, the fastening hole 368 of the pressing portion 360 and the fastening groove 346 of the main body 340 may not be necessary.

In addition, the shape and size of the insertion portion 364 of the main body assembly 362 may be a shape and size that can be inserted into the recessed portion 344 of FIG. 8, and are not necessarily required to be the same.

In the left plan view of FIG. 9, a planar shape of the fastening portion 366 of the main body assembly 362 is illustrated as a circular shape, but the present disclosure is not limited thereto. There can be no limitation on the shape of the fastening portion 366 of the pressing portion 360 as long as the fastening portion 366 may be connected to the main body 340.

An example of dimensions of actual implementation products of the pressing portion 360 shown in FIG. 9 is introduced. The dimensions introduced below may depend on the dimensions of each part of the main body 340 of FIG. 8. The insertion portion 364 of the main body assembly 362 has a diameter of 39.8 mm, the fastening portion 366 has a diameter of 63 mm, the protrusion 370 has a diameter of 10 mm, the fastening portion 366 has a thickness t1 of 5 mm, the main body assembly 362 has a thickness t2 of 10 mm, the protrusion 370 has a protrusion distance h of 5.7 mm, the fastening hole 348 has a diameter of 5.5 mm (diameter through which a 5 mm bolt may pass), and a circle formed by centers of four fastening holes 348 has a diameter of 50 mm.

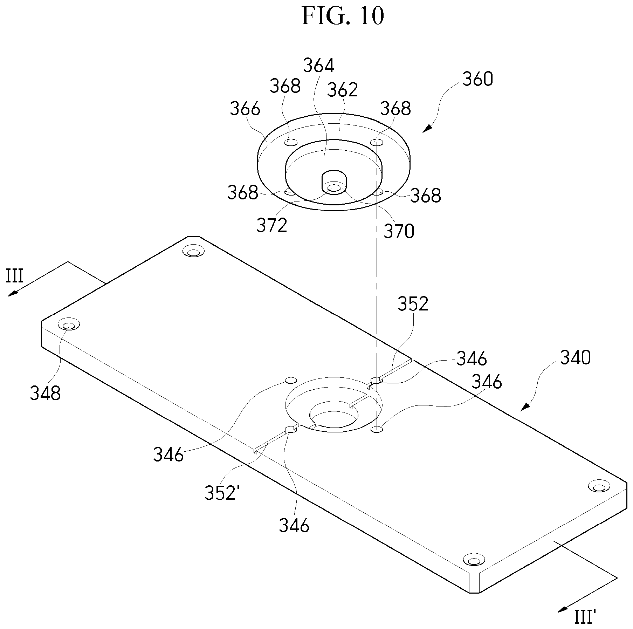

FIG. 10 is a conceptual view for describing an assembly method of the main body 340 and the pressing portion 360 of the partition jig shown in FIGS. 8 and 9.

The insertion portion 364 of the pressing portion 360 may be inserted into the recessed portion 344 formed around the opening 342 formed in the main body 340 so that the main body assembly 362 may be positioned in the main body 340. In this state, when the fastening hole 368 of the pressing portion 360 is fastened to the fastening groove 346 of the main body 340 using a fastening means, the fastening portion 366 may be fastened to the main body 340, and the assembly of the pressing portion 360 and the main body 340 may be completed. In this case, the protrusion 370 may be in a state of entering the opening 342 of the main body 340.

FIG. 11 is a cross-sectional view along line III-III' of FIG. 10 which illustrates a state before the main body 340 and the pressing portion 360 are assembled. FIG. 12 corresponds to FIG. 11 and illustrates a state in which the main body 340 and the pressing portion 360 are coupled.

It can be seen that a flush bolt 347 is used as a fastening means for fastening the fastening groove 346 of the main body 340 and the fastening hole 368 of the pressing portion 360.

Here, the fastening means for coupling the main body 340 and the pressing portion 360 is not limited to a bolts or screw as shown in FIGS. 11 and 12. For example, the main body 340 and the pressing portion 360 may be coupled using magnetism. For example, a magnet and/or a magnetic material (iron, nickel, or the like) may be attached to contact portions of the main body 340 and the pressing portion 360 (for example, the recessed portion 344 of the main body 340 and the insertion portion 364 of the pressing portion 360 or the fastening portion 366 of the pressing portion 360 and a corresponding portion of the main body 340) to couple the main body 340 and the pressing portion 360 using an attractive force therebetween. In addition, the main body 340 and the pressing portion 360 may be coupled using a known coupling method using a snap pin, a fastening hook, or a latch.

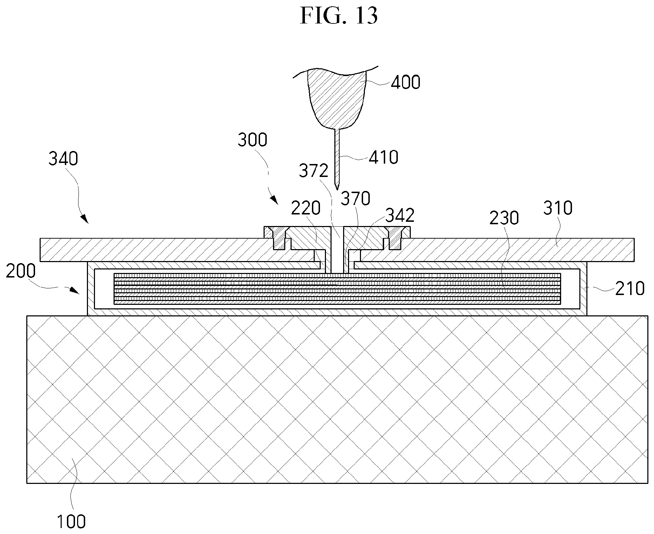

FIG. 13 is a schematic view of a penetration test of the secondary battery 200 using the partition jig in which the main body 340 and the pressing portion 360 are coupled according to the present embodiment.

In the case of a penetration test according to an example, the perforation 220 is formed in the case 210 of the secondary battery 200 placed on the test stand 100, the partition jig in which the main body 340 and the pressing portion 360 are coupled shown in FIG. 12 is installed to cover the secondary battery 200, and power is applied to the secondary battery 200 to charge the secondary battery 200. In the case of a penetration test according to another example, the perforation 220 is formed in the case 210 of the secondary battery 200 placed on the test stand 100, power is applied to the secondary battery 200 to charge the secondary battery 200, and the partition jig in which the main body 340 and the pressing portion 360 are coupled as shown in FIG. 12 is installed to cover the secondary battery 200.

Until the penetration test is performed, the secondary battery 200 stands by for a certain period of time (about 10 hours to about 20 hours) in such a state. In this case, since the protrusion 370 of the pressing portion 360 presses the electrode plate 230 exposed by the perforation 220, and the case 210 of the secondary battery is pressed by the main body 340, swelling of the secondary battery 200 can be suppressed.

In a state in which swelling is suppressed, the nail chuck 400 is lowered to allow the nail 410 pass through the nail through-hole 372 of the protrusion 370 and the perforation 220 of the secondary battery 200 to penetrate the electrode plate 230, thereby performing a test.

As described above, in the case of the partition jig 300 in which the main body 340 and the pressing portion 360 are separable, according to a penetration test method (for example, in the case of a penetration test that does not require pressing the electrode plate 230 of the secondary battery 200), the pressing portion 360 may be removed, and only the main body 340 may be used to perform a penetration test.

FIG. 14 is an enlarged view of a portion into which the nail 410 penetrates in FIG. 13 and is for describing a height h of the protrusion 370 of the pressing portion 360.

Referring to FIG. 14, the height h of the protrusion 370, that is, a distance (see FIG. 9) from the surface of the insertion portion 364 to the surface of the protrusion 370 pressing the electrode plate 230, may be greater than or equal to the sum of a thickness t4 of a portion denoted by reference numeral 345 in FIG. 8 (the remaining main body thickness portion from which the recessed portion 344 is not recessed), a thickness t3 of the case 210 of the secondary battery, and a distance d between an inner surface of the case 210 and the outermost electrode plate 231 (that is, h ≥ t4+t3+d).

For example, when t4=5 mm, t3=5 mm, and d=0.5 mm, h should be at least 10.5 mm. Actually, as test results, the best results of an effect of suppressing swelling of the electrode plate 230 could be obtained when h was 10.7 mm which was slightly greater than 10.5 mm. When h is greater than 10.5 mm, the protrusion 370 may push the outermost electrode plate 231 further inward.

A penetration test method performed using the above-described partition jig and a penetration test apparatus for a secondary battery including the same will be described. A description of the penetration test method is included in the description of the penetration test apparatus described above and is briefly summarized below to help ease understanding.

First, a secondary battery may be placed on a test stand, and a perforation may be formed in a case of the secondary battery to expose an electrode plate (see FIG. 3). Here, the perforations may be formed using a laser cutter or a physical cutter. A diameter of the perforation may be in a range of 10 mm to 20 mm, but is not limited thereto. In addition, the perforation may be formed in a circular shape, but the present disclosure is not limited thereto.

A partition jig including a protrusion is installed on the secondary battery to allow the protrusion to press the exposed electrode plate of the secondary battery. Here, the protrusion of the partition jig may be formed integrally with a main body of the partition jig as shown in FIG. 3 or may be manufactured separately from the main body of the partition jig and then assembled as shown in FIGS. 8 and 9.

After the partition jig is installed on the secondary battery as described above, power may be applied to the secondary battery to charge the secondary battery. In another embodiment, the secondary battery may be charged first, and then the partition jig 300 may be installed. A charge amount may be full charge (100%) or partial charge according to the penetration test specification.

A penetration test can be performed by allowing a nail to hit the exposed electrode plate of the secondary battery through a nail through-hole formed in the protrusion of the partition jig (see 330 in FIG. 3 and 372 in FIG. 9). In this case, a temperature sensor, a current/voltage measuring element, or the like may be used to measure temperature or electrical characteristic changes during penetration of the nail.

Materials usable in a secondary battery to be tested by a partition jig for a penetration test and a penetration test apparatus and method using the same according to the present disclosure, will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

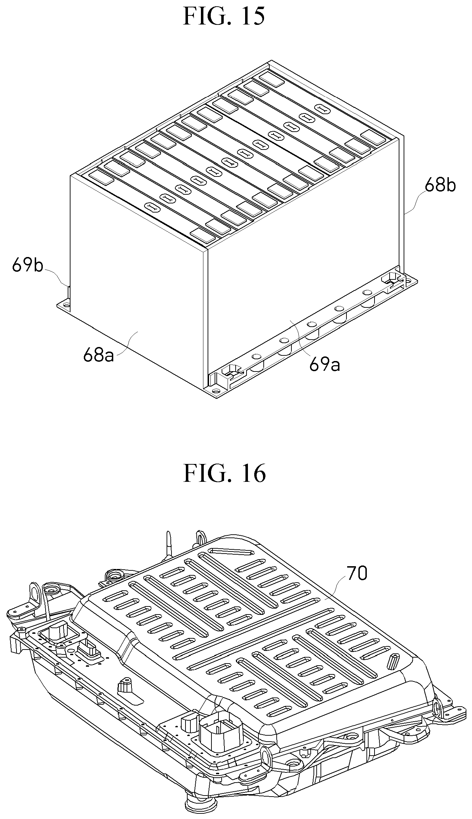

FIG. 15 is an exemplary view of a secondary battery module formed by arranging secondary batteries which may be subjected to a penetration test using a partition jig of the present disclosure. In accordance with an increase in secondary battery capacity for driving electric vehicles, a secondary battery module is manufactured by arranging and connecting a plurality of secondary battery cells in a lateral and/or vertical direction. A plurality of secondary batteries may be arrayed in a space formed by a pair of end plates 68a and 68b facing each other and a pair of side plates 69a and 69b facing each other. The arrangement of the secondary batteries may be designed to achieve desired voltage and current specifications.

FIG. 16 is an exemplary diagram illustrating a secondary battery pack 70 formed to apply the prismatic secondary battery module shown in FIG. 15 to an actual product (e.g., a vehicle). The secondary battery pack may be manufactured by accommodating a plurality of secondary battery modules into a pack housing designed to be mounted in an actual product. The pack housing may include fasteners and electrical outlets necessary for being mounted in the product. In FIG. 16, for convenience of illustration, related elements such as bus bars for electrical connection of the secondary batteries, cooling units, and external terminals are omitted.

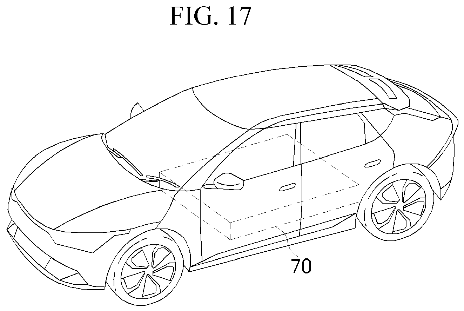

The secondary battery pack may be mounted in a vehicle. The vehicle may be, for example, an electric vehicle, a hybrid vehicle, or a plug-in hybrid vehicle. The vehicle may be a four-wheel drive or two-wheel drive vehicle. FIG. 17 is a diagram for describing a vehicle including the secondary battery pack shown in FIG. 16. FIG. 17 illustrates the secondary battery pack 70 according to one embodiment of the present disclosure mounted on a lower portion of a vehicle body of a vehicle V. The vehicle V operates by receiving power from the secondary battery pack 70 according to one embodiment of the present disclosure.

Although the present disclosure has been described above with respect to embodiments thereof, the present disclosure is not limited thereto. Various modifications and variations can be made thereto by those skilled in the art within the spirit of the present disclosure as defined by the appended claims and their equivalents.

### [Descriptions of symbols]

40: electrode assembly, 41: first current collector, 42: second current collector, 43: first electrode tab, 44: second electrode tab, 51: case, 60: cap assembly, 61: cap plate, 62: first terminal, 63: second terminal, 64: electrolyte injection port, 65: notch, 66: vent, 67: connection pillar, 68a, 68b: end plate, 69a, 69b: side plate, 70: secondary battery pack, 100: test stand, 200: secondary battery, 210: case, 220: perforation, 230: electrode plate, 250: portion around perforation 220, 300: partition jig, 310: main body, 320: protrusion, 330: nail through-hole, 341: first long side, 341': second long side, 342: opening, 343: first short side, 343': second short side, 344: recessed portion, 345: remaining main body thickness portion from which recessed portion 344 is not recessed, 346: fastening groove, 347: flush bolt, 348: through-hole, 350, 350': circumferential surface, 352: first groove, 352': second groove, 360: pressing portion, 362: main body assembly, 364: insertion portion, 366: fastening portion, 368: fastening hole, 369: bolt head receiving groove, 370: protrusion, 372: nail through-hole, 400: nail chuck, 410: nail, d: distance between inner surface of case 210 and outermost plate 231, h: protrusion distance (height) of protrusion 370, t1: thickness of fastening portion 366, t2: total thickness of main body assembly 362, t3: thickness of case 210 of secondary battery, t4: thickness of remaining main body portion 345 from which recessed portion 344 is not recessed, V: vehicle.

## Claims

1. A penetration test apparatus for a secondary battery, comprising:
a test stand on which a secondary battery is placed;
a partition jig configured to support the secondary battery of which an electrode plate is exposed through a perforation formed in a case of the secondary battery;
a nail configured to hit the exposed electrode plate of the secondary battery through the partition jig; and
a chuck configured to fix the nail,
wherein the partition jig comprises:
a main body;
a pressing portion which protrudes from the main body and enters through the perforation formed in the case of the secondary battery to press the electrode plate of an internal electrode assembly; and
a nail through-hole formed in the pressing portion.

2. The penetration test apparatus as claimed in claim 1, wherein the main body and the pressing portion of the partition jig are integrally formed.

3. The penetration test apparatus as claimed in claim 1, wherein the main body and the pressing portion of the partition jig are separate bodies.

4. The penetration test apparatus as claimed in claim 1, wherein the main body of the partition jig comprises an opening communicating with the perforation formed in the case of the secondary battery, and
the pressing portion of the partition jig comprises a protrusion which passes through the opening of the main body and is inserted into the perforation formed in the case of the secondary battery to press the electrode plate.

5. A partition jig used for a secondary battery penetration test, the partition jig comprising:
a main body configured to support a case of a secondary battery;
a pressing portion which protrudes from the main body and enters through a perforation formed in the case of the secondary battery to press an electrode plate of an internal electrode assembly; and
a nail through-hole which is formed in the pressing portion and through which a nail for a secondary battery penetration test passes.

6. The partition jig as claimed in claim 5, wherein the main body and the pressing portion of the partition jig are integrally formed.

7. The partition jig as claimed in claim 5, wherein the main body and the pressing portion of the partition jig are separate bodies.

8. The partition jig as claimed in claim 5, wherein the main body of the partition jig comprises an opening communicating with the perforation formed in the case of the secondary battery, and
the pressing portion of the partition jig comprises a protrusion which passes through the opening of the main body and is inserted into the perforation formed in the case of the secondary battery to press the electrode plate.

9. The partition jig as claimed in claim 8, wherein the main body further comprises a recessed portion into which the pressing portion is inserted.

10. The partition jig as claimed in claim 9, wherein a depth to which the recesses portion is recessed does not exceed 1/2 of a thickness of the main body.

11. The partition jig as claimed in claim 8, wherein the main body and the pressing portion further comprise a fastening means configured to fasten the pressing portion to be coupled to the pressing portion.

12. The partition jig as claimed in claim 11, wherein the fastening means comprises at least one of a bolt, a screw, and a nut.

13. The partition jig as claimed in claim 12, wherein the fastening means comprises at least one of a magnet and a magnetic material.

14. The partition jig as claimed in claim 8, wherein a diameter of the protrusion of the pressing portion is not less than 50% of a diameter of the perforation.

15. The partition jig as claimed in claim 8, wherein the nail through-hole is formed in the protrusion of the pressing portion.

16. The partition jig as claimed in claim 8, wherein a protrusion distance of the protrusion of the pressing portion is determined by a thickness of the case of the secondary battery and a distance between an inner surface of the case and an outermost electrode plate.

17. The partition jig as claimed in claim 5, wherein the partition jig further comprises a coupling hole for coupling to a test stand.

18. The partition jig as claimed in claim 5, further comprising a groove in which a lead wire of an electric element is accommodated.

19. A penetration test method of a secondary battery, comprising:
placing a secondary battery on a test stand and forming a perforation in a case of a secondary battery to expose an electrode plate;
installing a partition jig comprising a pressing portion configured to press the exposed electrode plate of the secondary battery and charging the secondary battery; and
allowing a nail to hit the exposed electrode plate of the secondary battery and performing a penetration test.

20. The penetration test method as claimed in claim 19, wherein the partition jig comprises a main body comprising an opening configured to communicate with the perforation formed in the case of the secondary battery, and a pressing portion which passes through the opening of the main body and is inserted into the perforation formed in the case of the secondary battery to press the electrode plate, and
the penetration test method further comprises assembling the main body and the pressing portion of the partition jig.
